# EUROPÄISCHE PATENTSCHRIFT

(11) **EP 1 236 256 B1**
(45) Veröffentlichungstag und Bekanntmachung des Hinweises auf die Patenterteilung: **09.07.2003**
(21) Anmeldenummer: 00992064.6
(22) Anmeldetag: 27.11.2000
(51) Int. Cl.: H02G 3/08, H02G 3/22

(54) **KABELDURCHFÜHRUNG**
CABLE GROMMET
PASSE-CABLE

(30) Priorität: 08.12.1999 DE 19959185
(43) Veröffentlichungstag der Anmeldung: 04.09.2002
(73) Patentinhaber: Ehmann, Bruno, 73563 Mögglingen (DE); Bethke, Detlev, 74405 Gaildorf (DE)
(72) Erfinder: Ehmann, Bruno, 73563 Mögglingen (DE); Bethke, Detlev, 74405 Gaildorf (DE)
(74) Vertreter: Dr. Weitzel & Partner
(86) Internationale Anmeldenummer: EP0011809
(87) Internationale Veröffentlichungsnummer: WO01042046

(56) Entgegenhaltungen:
- WO-A-99/06747
- DE-A- 3 619 183
- DE-C- 4 020 180
- US-A- 3 742 119

## Beschreibung

Es sind Kabeldurchführungen bekannt und z.B. in der DE 197 21 659 beschrieben, die mit einer Öffnung, durch die Kabel geführt werden sollen, gut verbunden werden können. Das Konfektionieren (=Bestücken) solcher Kabeldurchführungen ist aber schwierig, weil das Einbringen der Zugentlastungen mit Kabeln oder Leitungen zwischen die Rahmenteile - auch "Stücke" genannt - umständlich ist. Die Zugentlastungen haben mit den Rahmenteilen nur dann einen guten Halt, wenn sie montiert sind, sonst können sie sich von den Rahmenteilen lösen. Das ist ein großer Montagenachteil.

WO 99 06 747 A beschreibt eine Kabeldurchführung, die zwei Stücke umfasst. Die Stücke haben jeweils halbkreisförmige Aussparungen, die in zusammengefügtem Zustand der beiden Stücke einen Vollkreis zur Aufnahme einer zylindrischen Zugentlastung bilden. Diese Kabeldurchführung hat den Nachteil, dass bei der Montage eines Kabels mit Zugentlastung die Zugentlastung nur in eine der genannten halbkreisförmigen Aussparungen eingelegt wird und in dieser Position mit der Aussparung nicht zuverlässig verbunden ist. Will der Monteur weitere halbkreisförmige Aussparungen mit Zugentlastungen und von diesen umschlossenen Kabeln einlegen, so besteht die Gefahr, dass die zuvor eingelegte Zugentlastung mit Kabel wieder aus der halbkreisförmigen Halbkreisaussparung herausfällt.

DE 40 20 180 C beschreibt eine Kabeldurchführung, bei welcher für die Abdichtung ringförmige Dichtelemente, und für die Zugentlastung Kabelschellen vorgesehen sind. Eine solche Ausführungsform weist eine Vielzahl von Einzelteilen auf und ist daher teuer in der Herstellung und außerdem schwierig zu montieren.

DE 36 19 183 betrifft eine Kabeldurchführung für einen Sicherungs- und Verteilerkasten für Kraftfahrzeuge. Dabei geht es nicht um eine Kabeldurchführung, die zunächst mit Zugentlastungen und Kabeln konfektioniert, und anschließend montiert wird. Vielmehr ist dort ein ortsfestes Aufnahmeteil bereits an einer Kraftfahrzeugkarosserie fest montiert. Das Aufnahmeteil weist nach oben offene Aussparungen auf. In diese Aussparungen werden Zugentlastungen mit von diesen umschlossenen Kabeln von oben her eingelegt, und sodann mit einem Deckel verschlossen. Es tritt hierbei somit nicht das Problem auf, dass der Monteur die Kabeldurchführung beim Konfektionieren noch handhaben muss und dabei in Positionen bringt, bei denen eingelegte Zugentlastungen aus der Aufnahmeöffnung herausfallen können. Das Problem, das bei der Kabeldurchführung gemäß WO 99 06 747 A auftritt, so wie oben geschildert, liegt somit hier nicht vor, da das Aufnahmeteil ortsfest ist, die Zugentlastungen von oben her in die Aussparungen eingelegt werden und daher nicht nach unten herausfallen können, und da auch nach dem Einlegen der Zugentlastungen in die Aussparungen ein Hantieren mit dem Aufnahmeteil nicht mehr notwendig ist.

Bei der Erfindung geht es somit darum, eine Kabeldurchführung anzugeben, die problemlos konfektioniert und montiert werden kann und eine Vielzahl von Kabeln aufnehmen kann.

Diese Aufgabe wird durch die Merkmale der unabhängigen Ansprüche 1 und 11 gelöst. Die Vorteile der Erfindung sind folgende:
a) einfache Herstellung der Rahmenteile,
b) sicherer Halt der Zugentlastungen in und zwischen den Rahmenteilen, und zwar auch dann, wenn die Rahmenteile miteinander noch nicht fest verbunden sind,
c) große Packungsdichte, weil die einstückigen Zugentlastungen in den Rahmenteilen problemlos, sicher und unverlierbar angeordnet werden können,
d) besonders einfache Handhabung, und zwar auch dann, wenn von der Kabeldurchführung viele Kabel mit unterschiedlichen Durchmessem aufgenommen werden sollen.

Weitere Vorteile der Erfindung sind in den Unteransprüchen angegeben.

Ein Ausführungsbeispiel der Erfindung ist in der Zeichnung schematisch dargestellt und wird im Folgenden erläutert.

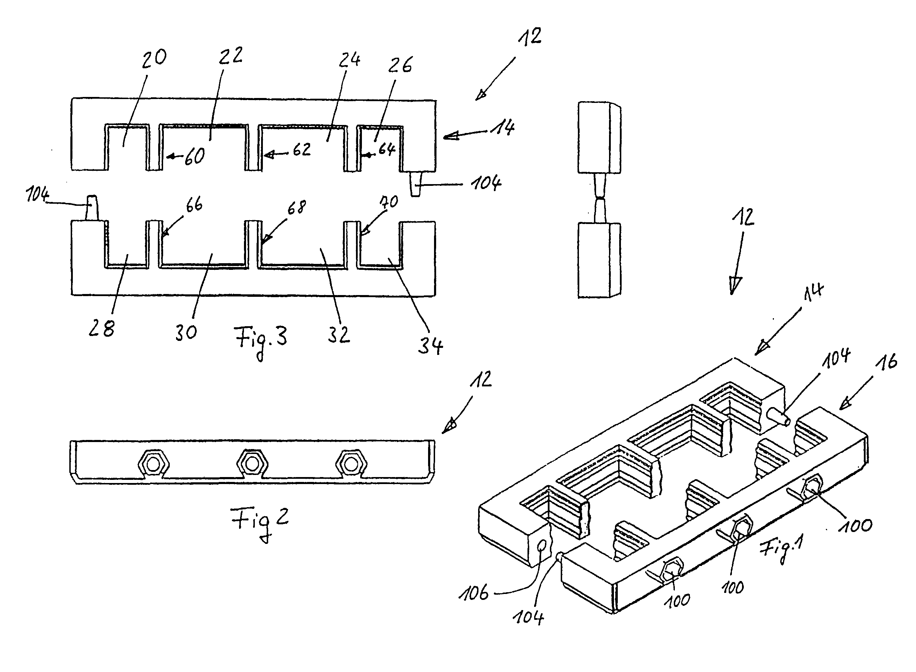

Es zeigen
- Fig. 1: eine Kabeldurchführung in Perspektive
- Fig. 2: eine vertikale Draufsicht der Kabeldurchführung nach Fig. 1,

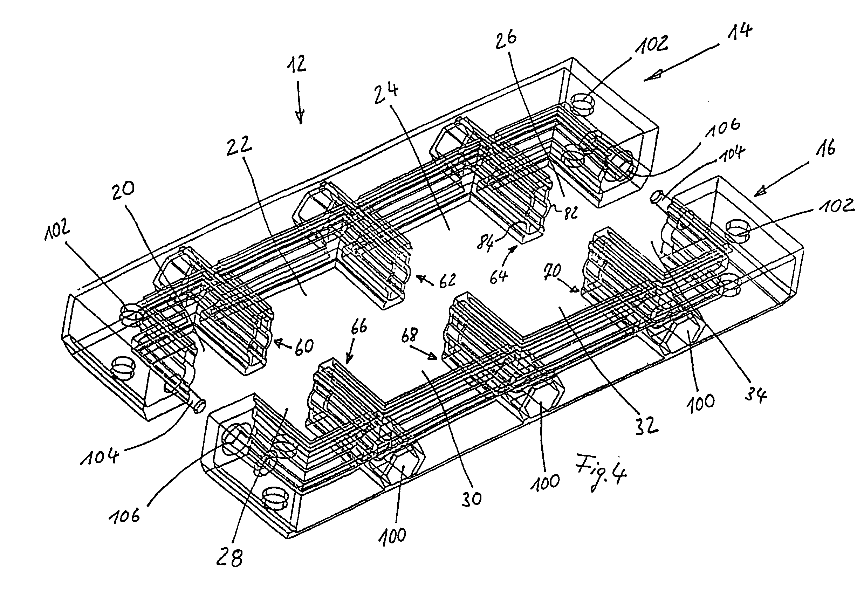

- Fig. 3: die Kabeldurchführung nach Fig. 1 in Vorderansicht,
- Fig. 4: eine Variante der Kabeldurchführung nach Fig. 1,
- Fig. 5: eine Kabeldurchführung in Stirnansicht,
- Fig. 6: einen Teilschnitt entlang der Linie VI-VI nach Fig. 5,

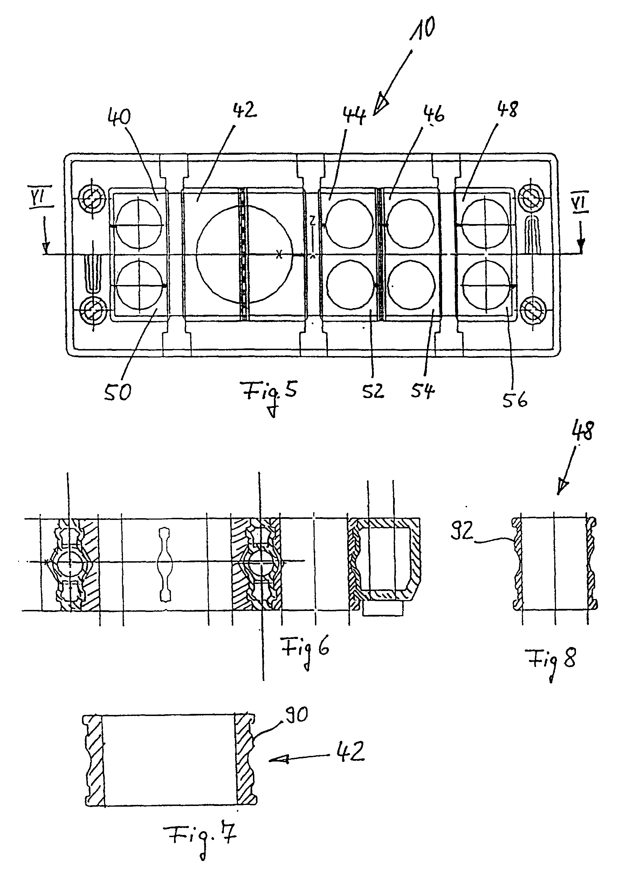

- Fig. 7: eine Zugentlastung,
- Fig. 8: eine weitere Zugentlastung,
- Fig. 9: eine weitere Kabeldurchführung mit einem Zwischenstück in Explosionsdarstellung,
- Fig. 10: die Kabeldurchführung nach Fig. 9 in Draufsicht,
- Fig. 11: die Kabeldurchführung nach Fig. 9 in zusammengebautem Zustand,
- Fig. 12: eine weitere Ausführung der Kabeldurchführung,
- Fig. 13: eine weitere Ausführung der Kabeldurchführung, und
- Fig. 14: eine Zugentlastung in zwei perspektivischen Ansichten

In der Zeichnung ist eine Kabeldurchführung 10 gezeigt, die aus einem Grundkörper 12 mit zwei Rahmenteilen 14 und 16 besteht. Die Rahmenteile 14 und 16 können miteinander fest verbunden sein (Betriebszustand) oder lose zueinander angeordnet sein (Losezustand). Der Grundkörper hat mehrere Öffnungen bzw. Ausformungen 20 bis 34. In diesen Öffnungen 20 bis 34 sind einstückige Zugentlastungen 40 bis 56 angeordnet (vgl. Fig. 5), durch welche die Kabel oder Leitungen (nicht dargestellt) mit dem Grundkörper 12 fest und dicht verbunden werden können. Im Betriebszustand sind alle Bauteile der Kabeldurchführung 10 fest miteinander verbunden. Im Losezustand sind die Rahmenteile 14, 16 mit den Zugentlastungen 40 bis 56 unverlierbar verbindbar. Die Zugentlastungen 40 bis 56 sind innerhalb des Grundkörpers 12 mit hoher Packungsdichte angeordnet. Der Grundkörper 12 ist dabei so ausgebildet, daß zwischen jeweils zwei Öffnungen ein Trennkörper 60 bis 70 angeordnet ist. Die jeweiligen Öffnungen 20 bis 34 sind vollständig in jeweils einem Stück 14 und 16 ausgebildet. Die Zeichnungen zeigen, daß die Rahmenteile 14 und 16 Vorsprünge 80, 82 oder Ausnehmungen 84 aufweisen, die mit der Außenwand 90, 92 der Zugentlastung 42, 48 kraftschlüssig verbindbar sind. Die Rahmenteile 14 und 16 haben ein kammartiges Profil und die Zugentlastungen 40 bis 56 weisen eine im Wesentlichen quader- oder würfelförmige Umhüllung auf.

Allgemein könnten die Rahmenteile der Kabeldurchführung auch so ausgebildet sein, daß ein Stück kammartig ausgebildet ist, während das andere Stück die Form einer Abdeckleiste aufweist.

Die Rahmenteile besitzen jeweils einen Vorsprung 104, der in eine passende Ausnehmung 106 des gegenüberliegenden Rahmenteiles eingreift, so daß eine definierte Position beider Rahmenteile zueinander gewährleistet ist. Eine feste Verbindung zwischen den Rahmenteilen 14 und 16 wird durch Schrauben hergestellt, die in die Öffnungen 100 gesteckt werden können.

### Die Konfektionierung kann wie folgt durchgeführt werden:

Die Kabel oder Leitungen werden mit hohlkörperartigen Zugentlastungen versehen, die gewöhnlich aus Gummi oder elastischem Kunststoff bestehen und längs geschlitzt sind, so daß sie auf die Leitung seitlich aufgeklipst werden können. Die Zugentlastungen werden sodann in die Öffnungen der Rahmenteile gesteckt, wo sie ortsfest und unverlierbar angeordnet sind. So bestückte Rahmenteile werden anschließend miteinander verbunden. Diese Baukastenform hat den Vorteil, daß zwischen den Rahmenteilen eine Vielzahl von Kabeln/Leitungen unter optimaler Nutzung des zur Verfügung stehenden Raumes angeordnet werden kann.

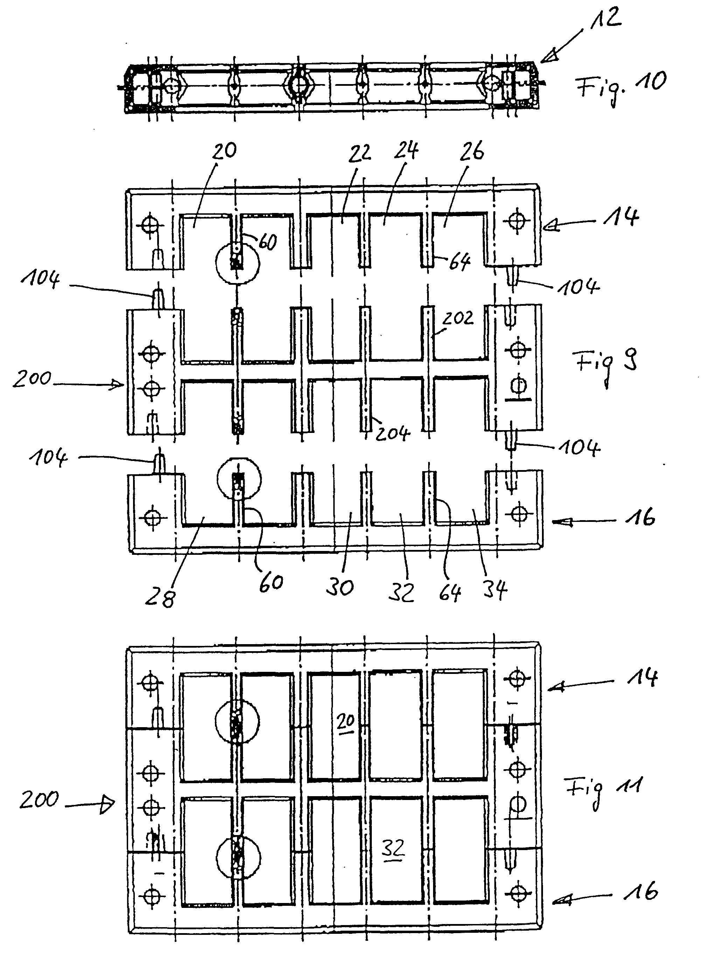

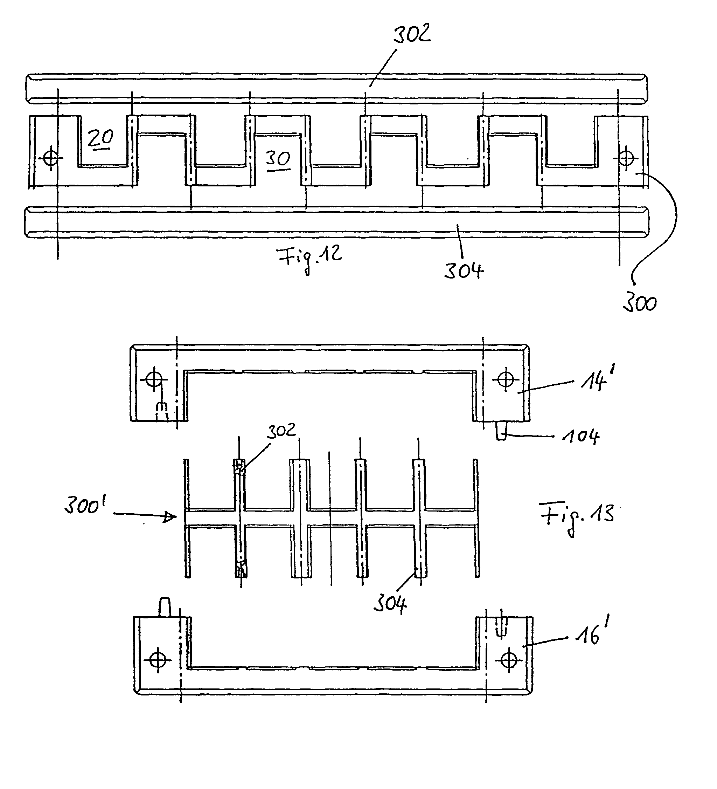

In den Fig. 9, 10 und 11 ist eine Kabeldurchführung gezeichnet. Wichtig ist hier, daß zwischen den beiden Rahmenteilen 14, 16 ein Zwischenstück 200 angeordnet ist. Es ist so gemacht, daß seine Trennkörper 202, 204 und die Trennkörper 60, 64 der Rahmenteile 14, 16 fluchten, was am besten in Fig. 11 dargestellt ist. So werden zwei Reihen von Öffnungen 20, 32 gebildet. Es besteht auch die Möglichkeit, mehrere solche Zwischenstücke 200 zusammenzufügen, so das auch drei, vier oder mehrere Reihen von Öffnungen gebildet werden können. In der Praxis kommt es darauf an, welchen Durchmesser die Kabel und welche Größe die entsprechenden Zugentlastungen haben.

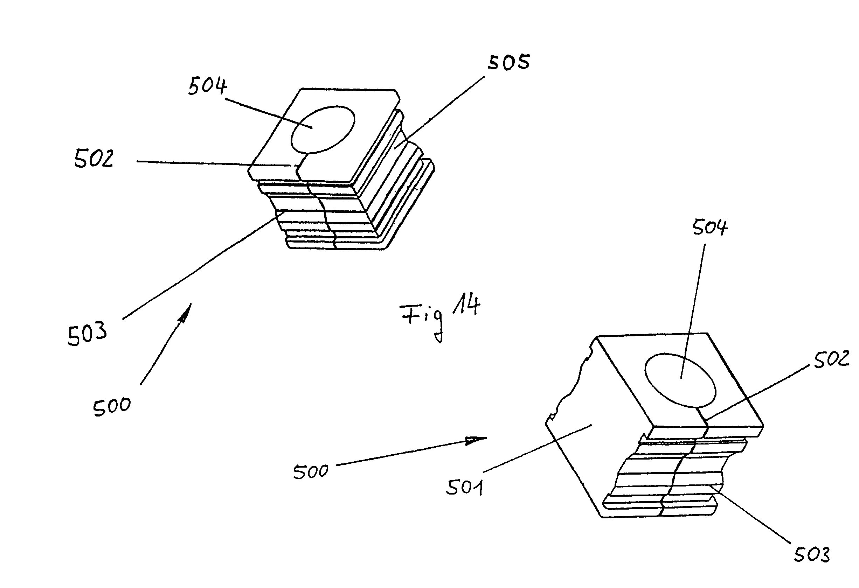

In Fig. 12 ist das Zwischenstück 300 schlangenförmig. Die Öffnungen 20, 30 sind mit Leisten 302, 304 abgedeckt. Aufgenommene Zugentlastungen sind in den Öffnungen 20, 30 so verspannt, daß die Zugentlastungen festgehalten werden (Form- und Kraftschluß). Es ist eine der einfachsten Ausführungen der Erfindung. In Fig. 13 ist die Kabeldurchführung ähnlich wie in Fig. 9. Die Rahmenteile 14', 16' haben aber keine Trennkörper. Trennkörper 302, 304 hat nur das Zwischenstück 300. Die Enden der Trennkörper 302, 304 berühren die Innenseiten der Rahmenteile 14', 16'.

Die Fig. 14 zeigt eine Zugentlastung 500 mit einem Schlitz 502. Die Zugentlastung 500 ist ein Würfel oder Quader mit einer Öffnung 504. Der Durchmesser der Öffnung 504 ist auf den Durchmesser des Kabels angepaßt Wenn die Kabeldurchführung Kabel mit Zugentlastungen trägt, dann sind die Leitungen von der Kabeldurchführung festgehalten.

Die Zugentlastung 500 hat eine flache und ebene Deckseite 501 und Seitenflächen 503, 505 mit Nuten. Die Zugentlastung 500 wird in die Rahmenteile 14, 16 in Richtung des Pfeils gesteckt. Die Seitenflächen 503, 505 werden mit den Trennkörpem 60 bis 70 verbunden, und zwar fest, so daß es zu keiner Verschiebung der Zugentlastung 500 in Kabelrichtung kommen kann. Die Seitenflächen 503, 505 sind mit den Trennkörpern 60 bis 70 formschlüssig und kraftschlüssig verbunden. Die ebene Deckseite 501 ist in der Höhe der freien Enden der Trennkörpem 60 bis 70, sie kann aber auch minimal herausragen aus den Rahmenteilen 14, 16. Beim Verbinden von zwei Rahmenteilen 14, 16 mit jeweils einer Reihe von Zugentlastungen stoßen dann diese Reihen über die ebenen Deckseiten 501 zusammen. So entsteht eine dichte Verbindung zwischen den Reihen. Die Deckseite 501 könnte auch anders ausgebildet sein. Wichtig ist, daß beim Zusammenbau eine dichte Verbindung hergestellt wird.

Zu den wichtigsten Merkmalen der Erfindung zählen folgende:
1) Die Rahmenteile 14, 16; 200, 300, 302, 304, 14', 16', 300' bestehen aus einem hartem Werkstoff (Kunststoff) und dienen zur Aufnahme und Halten der Zugentlastungen 40-56 aus elastischem Kunststoff oder Gummi.
2) Die Zugentlastungen (40-56) besitzen durchgehende Öffnungen (504) für die Kabel oder Leitungen, sind geschlitzt, um die Kabel in die Öffnungen 504 einlegen zu können, und haben normalerweise eine Quader- oder Würfelform, könnten aber in ihrer Aufsicht auch dreieckförmig oder oval sein.
3) Flächen der Zugentlastungen 40-56, die mit den Rahmenteilen in Kontakt stehen, sind so beschaffen, daß sie mit den Rahmenteilen kraft- und/oder formschlüssig verbunden werden können. Normalerweise wird dies durch Nuten oder Fedem erreicht. Das Einbringen der Zugentlastungen in die Kabeldurchführung erfolgt normalerweise durch Stecken, wie bei einer Schublade, so daß die Zugentlastungen bereits vor der endgültigen Montage der Kabeldurchführung mit dem Stück unverlierbar verbunden sind. Der Benutzer kann also mit dem Stück hantieren, ohne zu befürchten zu müssen, daß sich die Zugentlastung von dem Stück löst.
4) Die Schlitze 502 der Zugentlastung 500 sind so ausgerichtet, daß sie beim Zusammenbau der Kabeldurchführung dicht geschlossen werden und das aufgenommene Kabel dicht umschließen. Auch innerhalb der Kabeldurchführung sind die Zugentlastungen dicht und ortsfest angeordnet.
5) Besitzt die Kabeldurchführung zwei oder mehrere Reihen von Zugentlastungen, dann werden die Reihen dicht gegeneinander gedrückt. Die Berührungsflächen der Reihen sind eben oder auch rauh. Wichtig ist, daß diese Stelle weder Luft noch Flüssigkeit passieren können. Es können auch mehrere Reihen von Zugentlastungen gebildet und innerhalb der Kabeldurchführung angeordnet werden. Diese Reihen verlaufen dann normalerweise parallel zueinander. Durch passende Zwischenstück 200, 300' (Fig. 9, 11, 13) können auch zwei Reihen von einem Stück aufgenommen werden.
6) Wenn die Rahmenteile z, B. durch Schrauben fest miteinander verbunden werden, dann werden die Zugentlastungen innerhalb der Kabeldurchführung so zusammengedrückt, daß die Kabel in der Kabeldurchführung dicht und unverrückbar angeordnet sind. Solche Kabeldurchführungen eignen sich besonders gut für Schaltschränke.
7) Eine Zugentlastung 200 kann zwei oder mehrere Öffnungen haben, die jeweils durch einen separaten Schlitz geöffnet werden kann, um ein Kabel einlegen zu können.

## Patentansprüche

1. Kabeldurchführung (10) zum Konfektionieren mit Zugentlastungen (40-56) und mit Kabeln sowie zum anschließenden Montieren an einem Schaltschrank oder einem anderen Gegenstand, mit den folgenden Merkmalen:
1.1 wenigstens zwei Rahmenteile (14, 16, 14', 16', 200, 300, 300', 302, 304) sind im Lose-Zustand lose einander zugeordnet, und im Betriebszustand fest miteinander verbunden;
1.2 jedes Rahmenteil (14, 16, 14', 16', 200, 300, 300', 302, 304) weist wenigstens eine Aufnahmeöffnung (20 - 34) zur Aufnahme einer Zugentlastung (40 - 56) auf;
1.3 jede Zugentlastung (40 - 56) ist elastisch verformbar;
1.4 jede Zugentlastung (40 - 56) weist eine Durchgangsöffnung zum Umschließen eines Kabels auf, ferner einen Schlitz (502) zum Einführen des Kabels in die Durchgangsöffnung;
1.5 im Betriebszustand sind die Kabel in den Zugentlastungen (40 - 56), und die Zugentlastungen (40 - 56) in den Aufnahmeöffnungen (20 - 34) der Rahmenteile (14, 16, 14', 16', 200, 300, 300', 302, 304) fest und dicht eingespannt;
**gekennzeichnet durch** die folgenden Merkmale:
1.6 im Lose-Zustand ist jede Zugentlastung (40 - 56) in eine entsprechende Aufnahmeöffnung (20 - 34) der Rahmenteile (14, 16, 14', 16', 200, 300, 300', 302, 304) schubladenartig einsteckbar, und in eingestecktem Zustand kraftschlüssig unverlierbar gehalten.

2. Kabeldurchführung (10) nach Anspruch 1, **dadurch gekennzeichnet, dass** jede Zugentlastung im Lose-Zustand auch formschlüssig in ihrer Aufnahmeöffnung gehalten ist.

3. Kabeldurchführung nach Anspruch 1 oder 2, **dadurch gekennzeichnet, dass** die jeweiligen Aufnahmeöffnungen (20 - 34) zum größten Teil nur in einem der Rahmenteile (14, 16) vorgesehen sind.

4. Kabeldurchführung (10) nach Anspruch 3, **dadurch gekennzeichnet, dass** die jeweiligen Aufnahmeöffnungen (20 - 34) vollständig in jeweils einem Rahmenteil (14, 16) ausgebildet sind.

5. Kabeldurchführung (10) nach einem der Ansprüche 1 bis 4, **dadurch gekennzeichnet, dass** wenigstens ein Rahmenteil (14, 16) ein kammartiges Profil besitzt.

6. Kabeldurchführung (10) nach einem der Ansprüche 1 bis 5, **dadurch gekennzeichnet, dass** die einzeinen Zugentlastungen (40 - 56) eine im wesentlichen quader- oder würfelförmige Umhüllung aufweist.

7. Kabeldurchführung (10) nach einem der Ansprüche 1 bis 6, **dadurch gekennzeichnet, dass** die Kraftlinie im Betriebszustand quer zu den Rahmenteilen (14, 16) verläuft und die Fläche des Schlitzes (502) durchquert.

8. Kabeldurchführung (10) nach einem der Ansprüche 1 bis 7, **dadurch gekennzeichnet, dass** die Zugentlastungen (40 - 56) In wenigstens einer Reihe angeordnet sind.

9. Kabeldurchführung (10) nach einem der Ansprüche 1 bis 8, **dadurch gekennzeichnet, dass** die Zugentlastungen (40 - 56) in zwei oder mehreren parallelen Reihen angeordnet sind, und dass die Zugentlastungen (40 - 56) einander benachbarter Reihen miteinander in dichter Druckverbindung stehen.

10. Kabeldurchführung (10) nach einem der Ansprüche 1 bis 9, **dadurch gekennzeichnet, dass** jeweils eine Reihe von Zugentlastungen (40 - 56) von jeweils einem Rahmenteil (14, 16) aufgenommen ist.

11. Kabeldurchführung (10) zum Konfektionieren mit Zugentlastungen (40 - 56) und mit Kabeln sowie zum anschließenden Montieren an einem Schaltschrank oder einem anderen Gegenstand, mit den folgenden Merkmalen:
11.1 wenigstens zwei Rahmenteile (14, 16, 14', 16', 200, 300, 300', 302, 304) sind im Lose-Zustand lose einander zugeordnet, und im Betriebszustand fest miteinander verbunden;
11.2 ein Rahmenteil (200, 300, 300') weist wenigstens eine Aufnahmeöffnung (20 - 34) zur Aufnahme einer Zugentlastung (40 - 56) auf, während das andere Rahmenteil (14', 16', 302, 304) die Form einer Abdeckung aufweist;
11.3 jede Zugentlastung (40 - 56) ist elastisch verformbar;
11.4 jede Zugentlastung (40 - 56) weist eine Durchgangsöffnung zum Umschließen eines Kabels auf, ferner einen Schlitz (502) zum Einführen des Kabels in die Durchgangsöffnung;
11.5 im Betriebszustand sind die Kabel in den Zugentlastungen (40 - 50), und die Zugentlastungen (40 - 56) in der betreffenden Aufnahmeöffnung (20 - 34) des einen Rahmenteiles (200, 300, 300') fest und dicht eingespannt;
11.6 im Lose-Zustand ist jede Zugentlastung (40 - 56) in eine entsprechende Aufnahmeöffnung (20 - 34) des einen Rahmenteiles (200, 300, 300') schubladenartig einsteckbar, und in eingestecktem Zustand kraftschlüssig unverlierbar gehalten;

## Claims

1. Cable bushing (10) for preassembly with strain relief devices (40 to 56) and with cables and for subsequent fitting to a switch cabinet or another object comprising the following features:
1.1 at least two frame parts (14, 16, 14', 16', 200, 300, 300', 302, 304) are loosely associated with one another in the loose state, and in the operating state are rigidly connected to one another;
1.2 each frame part (14, 16, 14', 16', 200, 300, 300', 302, 304) has at least one receiving aperture (20 to 34) for receiving a strain relief device (40 to 56);
1.3 each strain relief device (40 to 56) is elastically deformable;
1.4 each strain relief device (40 to 56) has a through-aperture for surrounding a cable and also a slot (502) for inserting the cable into the through-aperture;
1.5 in the operating state the cables are inserted in a rigid and tight manner in the strain relief devices (40 to 56), and the strain relief devices (40 to 56) are fixed in a rigid and tight manner in the receiving apertures (20 to 34) of the frame parts (14, 16, 14', 16', 200, 300, 300', 302, 304); **characterised by** the following features:
1.6 in the loose state, each strain relief device (40 to 56) can be inserted in a drawer-like manner into a corresponding receiving aperture (20 to 34) of the frame parts (14, 16, 14', 16', 200, 300, 300', 302, 304), and in the inserted state is held non-positively and captively.

2. Cable bushing (10) according to claim 1, **characterised in that** each strain relief device in the loose state is also held non-positively in its receiving aperture.

3. Cable bushing according to claim 1 or 2, **characterised in that** the respective receiving apertures (20 to 34) are provided, primarily, only in one of the frame parts (14, 16).

4. Cable bushing (1) according to claim 3, **characterised in that** the respective receiving apertures (20 to 34) are completely formed in one respective frame part (14, 16).

5. Cable bushing (10) according to any one of claims 1 to 4, **characterised in that** at least one frame part (14, 16) has a comb-like profile.

6. Cable bushing (10) according to any one of claims 1 to 5, **characterised in that** the individual strain relief devices (40 to 56) comprise a substantially cuboid or dice-shaped covering.

7. Cable bushing (10) according to any one of claims 1 to 6, **characterised in that** the line of force in the operating state extends transversely to the frame parts (14, 16) and crosses the face of the slot (502).

8. Cable bushing (10) according to any one of claims 1 to 7, **characterised in that** the strain relief devices (40 to 56) are arranged in at least one row.

9. Cable bushing (10) according to any one of claims 1 to 8, **characterised in that** the strain relief devices (40 to 56) are arranged in two or more parallel rows, and **in that** the strain relief devices (40 to 56) in rows adjacent to one another are joined together in a tight pressure connection.

10. Cable bushing (10) according to any one of claims 1 to 9, **characterised in that** a respective row of strain relief devices (40 to 56) is received by a respective frame part (14, 16).

11. Cable bushing (10) for preassembly with strain relief devices (40 to 56) and with cables and for subsequent fitting to a switch cabinet or another object, comprising the following features:
11.1 at least two frame parts (14, 16, 14', 16', 200, 300, 300', 302, 304) in the loose state are loosely associated with one another, and in the operating state are rigidly connected to one another;
11.2 one frame part (200, 300, 300') comprises at least one receiving aperture (20, 34) for receiving a strain relief device (40 to 56), while the other frame part (14', 16', 302, 304) has the form of a cover;
11.3 each strain relief device (40 to 56) is elastically deformable;
11.4 each strain relief device (40 to 56) has a through-aperture for surrounding a cable and also a slot (502) for inserting the cable into the through-aperture;
11.5 in the operating state, the cables are fixed rigidly and tightly in the strain relief devices (40 to 50) and the strain relief devices (40 to 56) are fixed rigidly and tightly in the relevant receiving aperture (20 to 34) of the one frame part (200, 300, 300');
11.6 in the loose state each strain relief device (40 to 56) can be inserted in a drawer-like manner into a corresponding receiving aperture (20 to 34) of the one frame part (200, 300, 300'), and is held non-positively and captively in the inserted state.

## Revendications

1. Passe-câble (10) pour équipement avec des relâchements de tension (40-56) et des câbles et pour montage ultérieur sur une armoire de distribution ou un autre objet, avec les dispositions suivantes :
1.1 au moins deux parties de cadre (14,16, 14',16', 200, 300, 300', 302,304) sont à l'état détendu, agencées flottantes l'une par rapport à l'autre et à l'état de fonctionnement, reliées fixement ensemble;
1.2 chaque partie de cadre (14,16, 14',16', 200, 300, 300', 302,304) présente au moins un orifice de réception (20-34) destiné à recevoir un relâchement de tension (40-56) ;
1.3 chaque relâchement de tension (40-56) est déformable élastiquement ;
1.4 chaque relâchement de tension (40-56) présente un orifice de passage pour entourer un câble ainsi qu'une fente (502) pour introduire le câble dans l'orifice de passage ;
1.5 à l'état de fonctionnement, les câbles sont solidement encastrés dans les relâchements de tension (40-56) et les relâchements de tension (40-56) dans les orifices de réception (20-34) des parties de cadre (14,16, 14',16', 200, 300, 300',302, 304);
**caractérisé par** les dispositions suivantes :
1.6 à l'état détendu, chaque relâchement de tension (40-56) peut être introduit dans un orifice de réception correspondant (20-34) des parties de cadres (14,16, 14',16', 200, 300, 300', 302, 304) à la manière d'un tiroir et est, à l'état introduit, maintenu par action de force d'une manière qui ne peut pas être perdue.

2. Passe-câble (10) selon la revendication 1, **caractérisé en ce que** chaque relâchement de tension est, à l'état détendu, maintenu dans son orifice de réception également par complémentarité de formes.

3. Passe-câble selon le revendication 1 ou 2, **caractérisé en ce que** les orifices de réception (20-34) respectifs sont pour la plupart, prévus seulement dans une des parties de cadre (14,16).

4. Passe-câble (10) selon le revendication 3, **caractérisé en ce que** les orifices respectifs de réception (20-34) sont entièrement formés dans une partie respective de cadre (14,16).

5. Passe-câble (10) selon l'une des revendications 1 à 4, **caractérisé en ce qu'**au moins une partie de cadre (14,16) possède un profil en peigne.

6. Passe-câble (10) selon l'une des revendications 1 à 5, **caractérisé en ce que** les relâchements de tension (40-56) individuels présentent une enveloppe sensiblement carrée ou cubique.

7. Passe-câble (10) selon l'une des revendications 1 à 6, **caractérisé en ce que** la ligne de force à l'état de fonctionnement est orientée perpendiculairement aux parties de cadre (14,16) et croise la surface de la fente (502).

8. Passe-câble (10) selon l'une des revendications 1 à 7, **caractérisé en ce que** les relâchements de tension (40-56) sont agencés en -au moins- une rangée.

9. Passe-câble (10) selon l'une des revendications 1 à 8, **caractérisé en ce que** les relâchements de tension (40-56) sont agencés en deux ou plusieurs rangées parallèles, et **en ce que** les relâchements de tension (40-56) de rangées voisines sont mutuellement en relation étroite de pression.

10. Passe-câble (10) selon l'une des revendications 1 à 9, **caractérisé en ce que** chaque rangée de relâchements de tension (40-56) est réceptionnée par une partie respective de cadre (14,16).

11. Passe-câble (10) pour équipement avec des relâchements de tension (40-56) et des câbles et pour montage ultérieur sur une armoire de distribution ou un autre objet, avec les dispositions suivantes :
11.1 au moins deux parties de cadre (14,16, 14',16', 200, 300, 300', 302,304) sont à l'état détendu agencées flottantes l'une par rapport à l'autre et, à l'état de fonctionnement, reliées ensemble fixement ;
11.2 une partie de cadre (200, 300, 300') présente au moins un orifice de réception (20-34) destiné à recevoir un relâchement de tension (40-56) tandis que l'autre partie de cadre (14',16', 302, 304) présente la forme d'un couvercle ;
11.3 chaque relâchement de tension (40-56) est élastiquement déformable ;
11.4 chaque relâchement de tension (40-56) présente un orifice de passage pour entourer un câble ainsi qu'une fente (502) pour l'introduction du câble dans l'orifice de passage ;
11.5 à l'état de fonctionnement, les câbles sont solidement encastrés dans les relâchements de tension (40-56) et les relâchements de tension (40-56) dans l'orifice de réception (20-34) concerné de l'une des parties de cadre (200, 300, 300');
11.6 à l'état détendu, chaque relâchement de tension (40-56) peut être introduit dans un orifice de réception (20-34) correspondant de l'une des parties de cadre (200, 300, 300') à la manière d'un tiroir et, à l'état introduit, maintenu par action de force d'une manière qui ne peut pas être perdue.
